# FASCICULE DE BREVET EUROPEEN

(11) **EP 3 383 646 B1**
(45) Date de publication et mention de la délivrance du brevet: **13.11.2019**
(21) Numéro de dépôt: 16813090.4
(22) Date de dépôt: 28.11.2016
(51) Int. Cl.: B32B 17/10

(54) **VITRAGE FEUILLETE A BASE D'ADHESIF SENSIBLE A LA PRESSION ASSOCIE A SA FACE EXTERNE**
VERBUNDGLAS MIT HAFTKLEBSTOFF AUF DER AUSSENFLÄCHE DAVON
LAMINATED GLASS COMPRISING PRESSURE-SENSITIVE ADHESIVE ON THE EXTERNAL SURFACE THEREOF

(30) Priorité: 30.11.2015 FR 1561561
(43) Date de publication de la demande: 10.10.2018
(73) Titulaire: Saint-Gobain Glass France, 92400 Courbevoie (FR)
(72) Inventeur: SOON, Jia-Mei, 94240 L'Hay les Roses (FR)
(74) Mandataire: Saint-Gobain Recherche
(86) Numéro de dépôt international: PCT/FR2016/053110
(87) Numéro de publication internationale: WO 2017/093643

(56) Documents cités:
- EP-B1- 2 013 013

## Description

L'invention concerne un vitrage feuilleté comprenant un empilement de couches minces dont (i) au moins deux substrats verriers assemblés l'un à l'autre par (ii) au moins un intercalaire de nature organique et (iii) au moins une couche fonctionnelle thermosensible associée à la face externe de l'un desdits substrats verriers par (iv) une couche d'adhésif sensible à la pression. Avantageusement, ce vitrage est électriquement commutable.

L'invention est également relative à l'utilisation d'un tel vitrage pour fabriquer un vitrage destiné à équiper un véhicule, en particulier choisi parmi une automobile, un bus, un camion, un bateau, un aéronef tel qu'un avion ou un hélicoptère, et un train.

Les deux substrats verriers dudit vitrage sont éventuellement maintenus ensemble par une structure de châssis. Le vitrage feuilleté de l'invention peut ainsi être un vitrage de véhicule choisi parmi un pare-brise, un vitrage latéral avant, un vitrage latéral arrière, une lunette arrière et un vitrage de toit. Avantageusement, il s'agit d'un vitrage de toit.

Les intercalaires se présentent sous la forme de films. Ce sont généralement des films en polyvinyle-butyral, abrégé PVB ou en éthyle-vinyle-acétate, abrégé EVA. Le PVB a l'avantage de présenter une bonne adhérence au verre et un taux d'allongement important avant déchirure.
Le vitrage feuilleté comprenant un tel intercalaire plastique s'avère ainsi résistant à l'impact. Lors d'un choc avec un corps étranger, le verre se fendille et la fracture reste localisée au point d'impact sans altérer la visibilité à travers le vitrage. En outre, l'intercalaire PVB maintient les morceaux de verre en place, ce qui diminue le risque de coupure par éclats de verre et permet la conservation de l'étanchéité du vitrage. Enfin, l'énergie résiduelle du corps est absorbée par cet intercalaire. Le vitrage empêche donc le passage du corps si l'impact n'est pas disproportionné.

Les principales étapes du processus de fabrication d'un vitrage feuilleté sont les suivantes :
- Lavage du verre : Le substrat verrier est préalablement découpé et éventuellement façonné. Afin d'éliminer toute trace de contamination, le verre est lavé à l'eau ionisée et séché soigneusement.
- Assemblage : Il est effectué dans une enceinte fermée, hors poussière à une température de 18-20°C et avec une humidité relative de l'atmosphère de 30% Les couches de verre et d'intercalaire sont superposées en fonction de la composition désirée. L'ébarbage du volume feuilleté est effectué avant l'entrée dans le four de préchauffage.
- Dégazage : Cest l'opération la plus critique. Il s'agit d'éliminer l'air emprisonné, sous forme de bulles d'air éventuelles, entre l'intercalaire et la feuille de verre et de seller les bords de l'assemblage de manière à éviter tout risque de pénétration d'air au cours de l'opération finale d'autoclavage. Cette opération se fait par double calandrage avec un four de préchauffage à environ 60°C. Les conditions de températures sont fonction du type d'assemblage et de la vitesse de la ligne.
- Autoclavage : Le collage définitif du verre et de l'intercalaire est réalisé dans un autoclave à une forte pression et avec une montée en température pour assurer une forte liaison de l'assemblage.

Ainsi, pour un intercalaire en PVB, on opère à une pression entre 10 et 12 bars, bornes incluses, et à une température de 120 à 145°C, bornes incluses. Ceci permet de fluer suffisamment le PVB pour épouser parfaitement la surface du verre et créer l'adhésion.

Pour un intercalaire en EVA, on procède au collage à une température légèrement en dessous de 100°C. Les temps de cycle sont fonction du remplissage et de la composition du vitrage feuilleté.
- Nettoyage : Un deuxième ébarbage périphérique est nécessaire pour éliminer l'intercalaire excédentaire, dû au fluage.

Cependant, dans le cas où l'on souhaite fabriquer un vitrage feuilleté comprenant des couches intermédiaires fonctionnelles, la température à laquelle le collage doit avoir lieu peut poser problème. Le collage du ou des films intercalaires du vitrage au cours de la phase de lamination doit se dérouler, bien souvent, à une température difficilement compatible avec la mise en œuvre d'autres couches, notamment de couches dites fonctionnelles, sensibles à la température. En effet, de nombreux revêtements fonctionnels voient leur fonction définitivement endommagée par l'exposition à de telles températures d'autoclavage.

Actuellement, pour fabriquer un tel vitrage feuilleté en une seule étape de lamination à chaud, sans causer de perte de fonctionnalité à la couche fonctionnelle, on utilise un intercalaire en EVA au lieu du PVB, l'EVA présentant une température de mise en œuvre ou température de collage pour réaliser la stratification bien inférieure à celle du PVB.

Cependant, la couche de PVB reste indispensable en raison de sa résistance aux chocs dans de nombreuses applications. Il est donc impossible de réaliser la fabrication de vitrage feuilleté présentant un revêtement fonctionnel thermosensible avec une seule étape de lamination à haute température.

D'où, un processus de stratification à deux temps mis au point par Saint-Gobain. Dans ce procédé faisant partie de l'art antérieur, (i) une couche de PVB est, au cours d'une première étape de lamination à chaud, appliquée à une température pouvant atteindre 120°C sur une feuille de verre destinée à former le côté du vitrage en contact avec l'espace extérieur du véhicule, puis l'ensemble peut être associé, par exemple à d'autres feuilles, telle qu'une feuille de métal, qui offrent des fonctionnalités complémentaires, enfin (ii) un film actif, par exemple un film pour dispositif à particules en suspension, abrégé SPD, est rajouté dans une seconde étape de lamination à chaud à une température inférieure à 100°C, ledit film étant solidarisé par de l'EVA à la couche de verre destiné à former le côté du vitrage en contact avec l'espace intérieur du véhicule et au stratifié comprenant le PVBde l'étape précédente. De cette façon, le film de SPD n'est jamais exposé à la haute température de stratification exigée pour la mise en œuvre du PVB.

Seul un procédé comptant au moins deux étapes de lamination à chaud est donc actuellement possible pour la stratification d'un vitrage feuilleté comprenant au moins une couche de PVB et de SPD. Mais ce procédé nécessite plusieurs manipulations, ne peut pas être réalisé en continu et est donc consommateur de temps et d'énergie.

Le but de l'invention est de parvenir à remédier aux inconvénients de l'art antérieur, en mettant au point un nouveau type d'empilement de vitrage feuilleté, dont les couches adhèrent efficacement les unes aux autres tout en conciliant une thermo-sensibilisation et une résistance aux chocs.

Un autre but important de l'invention est de proposer un procédé de fabrication d'un tel empilement et par extension d'un vitrage feuilleté comprenant un tel empilement qui soit économiquement avantageux.

La demanderesse a mis au point un vitrage feuilleté, résistant aux chocs et présentant au moins un film actif thermosensible qui est maintenant réalisable en une seule étape de lamination à chaud mettant en œuvre au moins un intercalaire polymérique.

L'invention a ainsi pour objet, un vitrage feuilleté selon la revendication 1 comprenant :
- une première feuille de verre 1;
- au moins une feuille intercalaire 3 en polymère thermoplastique; ladite première feuille de verre 1 étant en contact direct avec ladite feuille intercalaire 3 ;
- éventuellement une feuille « anti solaire » 4 ou couche métallique fonctionnelle à propriétés de réflexion dans l'infrarouge et/ou dans le rayonnement solaire,
- éventuellement une seconde feuille intercalaire 3 lorsque ladite feuille « anti-solaire » 4 est présente,
- une deuxième feuille de verre 2; et
- au moins une feuille d'adhésif sensible à la pression 5, en contact direct avec une feuille fonctionnelle thermosensible 6;
ladite seconde feuille de verre 2 étant en contact direct avec ladite feuille d'adhésif sensible à la pression 5.

La feuille d'adhésif sensible à la pression 5 et la deuxième feuille de verre 2 sont en contact direct au niveau de la face externe de cette deuxième feuille de verre.

Les deux faces d'un même vitrage sont, chacune, en contact avec un milieu externe. Ces milieux externes se répartissent chacun de part et d'autre dudit vitrage.

Dans le sens de l'invention, la face « externe » d'une couche ou d'une feuille signifie la face de ladite couche ou de ladite feuille du vitrage la plus proche du milieu externe le plus proche.

Dans le sens de l'invention, la face « interne » d'une couche ou d'une feuille signifie la face de ladite couche ou de ladite feuille du vitrage la plus éloignée du milieu externe le plus proche.

Dans le sens de l'invention, on utilisera indifféremment les termes de « feuille », « film » ou « couche » dans la présente invention pour définir les différentes strates de la structure du vitrage feuilleté selon l'invention. Ces termes ont ici la même signification.

Avantageusement, la première feuille de verre 1 dudit vitrage est en contact direct avec le milieu externe de ce dernier qui est le milieu externe au véhicule doté d'un tel vitrage feuilleté objet de l'invention. Respectivement, la seconde feuille de verre 2 dudit vitrage est en contact direct avec le milieu externe de ce dernier qui s'avère être le milieu interne au véhicule, c'est-à-dire le milieu où se trouvent le conducteur et les éventuels passagers.

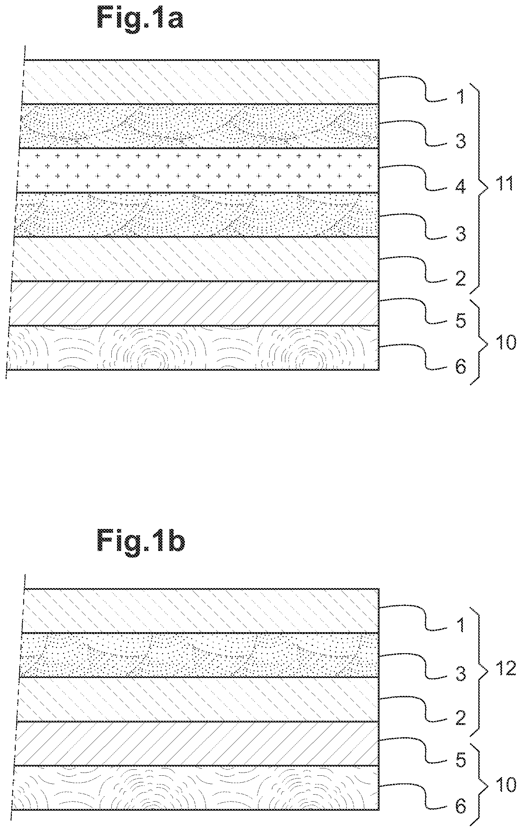

Selon un premier mode de réalisation de l'invention représenté sur la figure 1a, le vitrage feuilleté selon l'invention comprend successivement :
- une première feuille de verre (1),
- une première feuille intercalaire (3) en polymère thermoplastique,
- une feuille « anti solaire » (4) ou couche métallique fonctionnelle à propriétés de réflexion dans l'infrarouge et/ou dans le rayonnement solaire,
- une seconde feuille intercalaire (3) lorsque ladite feuille « anti-solaire » (4) est présente,
- une deuxième feuille de verre (2),
- une feuille d'adhésif sensible à la pression (5),
- une feuille fonctionnelle thermosensible (6).

Selon un deuxième mode de réalisation de l'invention représenté en figure 1b, le vitrage feuilleté selon l'invention comprend
- une première feuille de verre (1),
- une feuille intercalaire (3) en polymère thermoplastique,
- une deuxième feuille de verre (2),
- une feuille d'adhésif sensible à la pression (5),
- une feuille fonctionnelle thermosensible (6).

Ces modes de réalisations ne sont, bien entendu, pas limitatifs.

Selon l'invention, le polymère thermoplastique de la feuille intercalaire 3 est avantageusement choisi parmi le polyvinylbutyral, le polyuréthane, l'éthylène acét at e de vinyle et les ionomères.

Selon l'invention, le polymère thermoplastique de la feuille intercalaire 3 est avantageusement le PVB.

Selon l'invention, l'adhésif sensible à la pression est avantageusement choisi parmi les adhésifs sensibles à la pression à base d'acrylates et les adhésifs sensibles à la pression à base de silicone.

Selon l'invention, la feuille fonctionnelle thermosensible 6 est avantageusement à base de cristaux liquides encapsulés, de particules électrophorétiques dispersées dans un milieu, de particules dispersées dans un fluide électrophorétique ou de particules de polarisation de la lumière.

Selon l'invention, la feuille « anti solaire » est avantageusement en argent ou tout autres métal ayant des propriétés de réflexion de la lumière ou un métal ou composé métallique ayant des propriétés d'absorption de la lumière. On peut citer comme exemples, les produits réflecteurs Solargard® de Saint-Gobain tel que le LX70 et les produits absorbeurs Ceramic Series de Huper Optik® tel que le Huper Optik® C5.

Selon l'invention, le vitrage feuilleté peut être plat ou bombé.

En outre, il s'agit avantageusement d'un vitrage de véhicule choisi parmi un pare-brise, un vitrage latéral avant, un vitrage latéral arrière, une lunette arrière et un vitrage de toit.

Il peut s'agir en particulier d'un vitrage de véhicule choisi parmi une automobile, un train, un camion, un avion et un bus.

L'invention a également pour objet un procédé de fabrication d'un vitrage feuilleté tel que défini précédemment, dans lequel les étapes de mise en place des différentes feuilles ont lieu en partant (i) de la mise en place de la feuille intercalaire 3 en polymère thermoplastique sur la face interne de la première feuille de verre 1, ou en partant (ii) de la mise en place d'une feuille d'adhésif sensible à la pression 5 sur l'une des deux faces d'une feuille fonctionnelle thermosensible 6 ou encore en partant (iii) de la mise en place d'une feuille d'adhésif sensible à la pression 5 sur la face externe de la seconde feuille de verre 2.
Le procédé de fabrication d'un vitrage feuilleté selon l'invention, comprend :
- au moins une étape de mise en place d'une feuille intercalaire 3 en polymère thermoplastique sur la face interne d'une première feuille de verre 1, éventuellement préalablement bombée,
- éventuellement la mise en place d'une feuille « anti solaire » 4 sur la face restée vacante de ladite feuille intercalaire 3 qui est ainsi prise en sandwich entre ladite première feuille de verre 1 et ladite éventuelle feuille « anti solaire » 4 et la mise en place d'une seconde feuille intercalaire 3 sur la face restée vacante de ladite feuille « anti solaire » 4 qui est ainsi prise en sandwich entre une première et une seconde feuilles intercalaires 3,
- puis au moins la mise en place d'une seconde feuille de verre 2 sur la face, restée vacante de la première feuille intercalaire 3 lorsque lesdites seconde feuille intercalaire 3 et feuille « anti solaire » 4 sont absentes, de manière à former un feuilleté partiel 12 et la mise en place d'une seconde feuille de verre 2 sur la face, restée vacante de la seconde feuille intercalaire 3 lorsque lesdites seconde feuille intercalaire 3 et feuille « anti solaire » 4 sont présentes, de manière à former un autre feuilleté partiel 11, et/ou
- au moins une étape de mise en place d'une feuille d'adhésif sensible à la pression 5 sur l'une des deux faces d'une feuille fonctionnelle thermosensible 6, de manière à former un feuilleté partiel 10.

Les modes de réalisations décrits ci-dessous permettent, en particulier, d'obtenir les empilements selon l'invention, tels que représentés sur les figures 1a ou 1b.

Ledit feuilleté partiel 11 ou 12 peut ensuite être appliqué, au niveau de la face restée vacante de sa seconde feuille de verre 2, sur ou sous ledit feuilleté partiel 10 au niveau de la face vacante de sa feuille d'adhésif sensible à la pression 5.

Selon l'invention, le procédé de fabrication du vitrage feuilleté peut comprendre, en outre, au moins :
- une étape de dégazage sous vide du feuilleté résultant, avec utilisation d'un joint périphérique ou d'un sac à vide,
- éventuellement une étape de scellage à chaud des bords dudit feuilleté, et
- une étape d'autoclavage.

Le procédé peut comprendre, en outre, au moins une étape de calandrage, éventuellement à chaud.

L'invention est également relative à l'utilisation d'un vitrage tel que défini précédemment pour fabriquer un vitrage de véhicule choisi parmi un pare-brise, un vitrage latéral avant, un vitrage latéral arrière, une lunette arrière et un vitrage de toit et/ou pour fabriquer un vitrage de véhicule choisi parmi une automobile, un train, un camion, un aéronef et un bus.

Le substrat verre du vitrage feuilleté selon l'invention peut être du type vendu sous la dénomination commerciale Planiclear® ou Planitherm® par la société Saint-Gobain, voir même VG10. Son épaisseur sera choisie en fonction de l'utilisation envisagée.

Le vitrage selon l'invention comprend au moins une feuille d'adhésif sensible à la pression.
Un adhésif sensible à la pression, abrégé PSA et communément appelé autoadhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:
1/ d'acrylates, qui peuvent être suffisamment collant pour ne pas exiger un agent tackifiant supplémentaire.
2/ de Nitriles
3/ de silicone, réquérant des agents tackifiants spéciaux telles que des résines de silicate de type « MQ », composées de triméthyle silane monofonctionnel ("M') qui a réagi avec tétrachlorure de silicium quadrifonctionnel ("Q"). Les PSA à base de silicone sont par exemple des gommes et résines de polydiméthylsiloxane dispersées dna sdu xylène ou un malnge de xylène et toulène.
4/ des copolymères blocs à base de styrène tel que des copolymères blocs Syrène butadiène -styrène (SBS), Syrène-éthylène / butylène -styrène (SEBS), styrène-éthylène / propylène (SEP), Syrène isoprène -styrène (SIS),
5/ Les éthers vinyliques.

Avantageusement, l'adhésif sensible à la pression conforme à l'invention est choisi parmi les PSA à base d'acrylates et les PSA à base de silicone.

Ces adhésifs sont commercialisés sous forme de rouleaux d'adhésifs double face.

On peut citer comme PSA à base de silicone les adhésifs de Dow Corning® tel que le 2013 Adhesive, 7657 Adhesive, 02-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

Le vitrage feuilleté selon l'invention comprend, en outre, également une feuille fonctionnelle thermosensible.

Il peut s'agir d'un film de dispositif de particules en suspension (SPD) ou d'un stratifié d'un tel film, dans lequel le film comprend des substrats revêtus, sur au moins une partie de leur surface interne, (i) par un polymère conducteur tel que, par exemple, le polythiophène ou (II) par une couche conductrice inorganique tel que par exemple l'oxyde d'étain et d'indium, pour servir de moyen d'électrode. Le polymère peut être appliqué sous la forme d'une composition aqueuse comprenant, en plus du polymère, au moins un solvant et au moins un liant. Un polymère conducteur à base de polythiophène préféré est un polymère de polyéthylène dioxythiophène (PEDT). Le polymère peut être dopé par du polystyrène sulfonate. Les électrodes polymères peuvent être connectées à une matière conductrice qui s'étend au-delà d'une limite externe du film pour connecter le film à une source de tension appropriée.

On peut aussi citer les films qui comprennent une matrice polymère et présentent des gouttelettes d'une suspension de modulateur de lumière liquide contenant une pluralité de particules dispersées dans un milieu liquide en suspension distribué au sein de la matrice. Ledit milieu en suspension (a) est pratiquement immiscible avec la matrice polymère, (b) possède à la pression atmosphérique un point d'ébullition supérieur à environ 100 °C, (c) une résistivité électrique d'au moins environ 0,8 x 10⁶ ohms par carré, et (d) un indice de réfraction à 25 ° C qui diffère de pas plus d'environ 0,002 de celui de la matrice polymère, mesuré à pratiquement la même température. Le milieu de suspension renferme au moins un composé liquide sélectionné parmi le groupe englobant méthyl pyrrolidinone, éthyl pyrrolidinone, diméthyl malonate, diéthyl malonate, diméthyl succinate, di(propylène glycol)méthyl éther, diméthyl phtalate, butyl phtalyl butyl glycolate, éthyl lactate, propylène carbonate, diméthyl perfluorosubérate, diméthyl tétrafluorosucciate, tétra (éthylène glycol)diméthyl éther, tri(éthylène glycol)diméthyl éther, di(éthylène glycol)diméthyl éther, éthylène glycol phényl éther, de l'huile de lin époxydé, de l'huile de soja époxydé, diéthylisophtalate, un ester de laurate à base de copolyol de silicone, un copolymère de copolyol de silicone, un ester de copolyol de silicone, un ester d'isostéarate à base de copolyol de silicone, un ester de pélergonate à base de copolyol de silicone, diéthylisophtalate, diméthyl octofluoroadipate, ainsi que des mélanges correspondants et, facultativement, au moins un milieu de suspension liquide antérieurement connu. La matrice polymère peut facultativement être réticulée pour former le film afin de produire une matrice polymère réticulée.

Un tel film à dispositif à particules en suspension est approprié pour être utilisé comme modulateur de lumière d'un vitrage feuilleté selon l'invention.

Il peut aussi s'agir éventuellement d'un film contenant des particules encapsulées dispersées dans un fluide de suspension, ou électrophorétique. Ledit fluide peut être un mélange de deux ou de plus de deux fluides, ou bien un fluide unique. Par ailleurs, ces particules peuvent contenir, elles-mêmes, un liquide et être dispersées dans un fluide de suspension. En tout état de cause, le fluide de suspension peut avoir une densité ou un indice de réfraction dont les valeurs sont sensiblement adaptées à celles qui caractérisent les particules dispersées dans le fluide. Il peut s'agir, en particulier, de particules polymères colorées, dotées de préférence d'une fonctionnalité de surface de rétention des charges. Dans les milieux électrophorétiques, il est avantageux d'utiliser des particules pigmentaires comportant des écorces polymères comprenant de 0,1 à 5 pour cent en moles de motifs répétitifs issus d'un monomère acrylate fluoré ou d'un monomère méthacrylate fluoré. Le polymère a de façon spécifique une structure à chaîne ramifiée, avec des chaînes latérales qui s'étendent à partir d'une chaîne principale.

Le fluide conducteur peut être coloré. Il peut comprendre un solvant polaire et un colorant choisi parmi un pigment et/ou une teinture. Le fluide conducteur coloré ne devrait pas provoquer de rupture électrique d'un diélectrique dans le dispositif dans lequel il est employé. Un agent pour la commande de conductivité électrique peut facultativement être ajouté au fluide conducteur coloré.

L'application de champs électriques dans un vitrage, muni d'un tel film, par électrophorèse permet d'agir sur les propriétés optiques dudit vitrage.

En outre, il peut s'agir d'un vitrage disposant d'un système électrochrome comprenant des couches électroconductrices, séparées par une couche d'un matériau électrochrome, un électrolyte et une contre électrode, les-dites couches électroconductrices étant munies chacune d'une bande électroconductrice réalisée dans un matériau dont la conductivité électrique est grande par rapport à celle des couches électroconductrices, les bandes électroconductrices étant disposées le long de bords opposés du vitrage et reliées à un générateur de tension qui applique en phase de coloration (ou respectivement en phase de décoloration), entre deux points A et B appartenant respectivement aux couches électroconductrices et à proximité immédiate des bandes électro-conductrices une différence de potentiel. Avantageusement, les bandes électroconductrices sont en cuivre, soudées sur l'électrode conductrice telle que définie précédemment, la couche d'un matériau électrochrome est constituée d'un matériau électrochrome cathodique tel que, par exemple, le trioxyde de tungstène, la contre-électrode est constituée d'un matériau électrochrome-anodique tel que, par exemple, l'oxyde d'iridium et/ou l'électrolyte est un électrolyte à conduction protonique tel que par exemple un complexe polymérique de polyoxyde d'éthylène et d'acide orthophosphorique anhydre ou un électrolyte à conduction ionique au lithium ou protonique (H⁺).

On peut ainsi citer, par exemple, les viologènes et les polymères conducteurs, telle que la polyaniline ou PAni.

Enfin, on peut également citer les films fonctionnels à base de cristaux liquides dispersés dans une matrice polymère connu sous le sigle abrégé PDLCs. Les cristaux liquides dispersés dans une matrice polymère sont une classe de matériaux hétérogènes constitués d'une dispersion de microgouttelettes de cristal liquide dans une matrice de polymère solide et plus ou moins flexible. Ces matériaux présentent des propriétés électrooptiques. Ils peuvent en effet commuter entre un état opaque fortement diffusif (état OFF) et un état transparent (état ON) après application d'un champ électrique.

Le système PDLC est mis en œuvre dans les fenêtres commutables. Il comporte plusieurs avantages tels la facilité de fabrication, la facilité d'utilisation à grande échelle, la stabilité, la vitesse de leur temps de réponse et le fait de ne pas nécessiter l'emploi de polariseurs qui absorbent près de la moitié de la lumière incidente.

Différentes mésophases peuvent être utilisées pour élaborer ces matériaux : la phase nématique, la phase cholestérique ainsi que les phases smectiques A et C*.

Le principe des systèmes électro-optiques utilisant un PDLC consiste en un composite placé en sandwich entre deux électrodes constituées de lames de verre dont une face est recouverte d'une couche conductrice et transparente d'oxyde d'indium et d'étain (ITO). En l'absence de champ électrique, l'orientation moyenne des directeurs moléculaires de cristal liquide dans le Cristal liquide est aléatoire. La différence d'indice de réfraction entre le cristal liquide ségrégué et la matrice macromoléculaire conduit à un matériau d'aspect laiteux et opaque et qui va diffuser la lumière (état OFF).

Lors de l'application d'un champ électrique entre les électrodes de la cellule, les directeurs moléculaires s'orientent dans la direction du champ. Un faisceau d'indice normal traverse les gouttelettes avec un indice de réfraction égal à n0, indice ordinaire des molécules de cristal liquide. Si cet indice est proche de celui de la matrice polymère, le film apparaît clair et transparent (état ON).

Comparé aux vitrage feuilletés standard, le vitrage électriquement commutable fournit des fonctions supplémentaires particulières qui se traduisent en terme de confort d'utilisateur, de transmission de la lumière et d'économies d'énergie. Le vitrage commutable peut rarement être installé directement comme un produit fini. Typiquement, avant la mise en œuvre du vitrage commutable, une pré-stratification est nécessaire. Par exemple, pour la mise en œuvre d'un film de SPD au niveau du cadre du toit ouvrant d'un véhicule automobile, il faut réaliser un stratifié entre au moins 2 feuilles de verre clair ou teinté avec du PVB. Ceci afin de remplir les normes de sécurité en cas de la rupture de verre et prolonger la durée de vie du film de SPD.

Le vitrage feuilleté selon l'invention comprend, de plus, au moins une feuille intercalaire polymérique. L'intercalaire est en polymère organique. Ce polymère peut notamment être en polyvinylbutyral abrégé PVB, en éthylène vinylacétate abrégé EVA, en polyuréthane ou à base de ionomères. On peut citer comme exemples de ionomères, les produits Sentryglass® commercialisés par la société Dupont®. Avantageusement, il s'agit du PVB.

Le vitrage feuilleté selon l'invention peut comprendre, enfin, optionnellement une feuille « anti solaire » dite également feuille de contrôle solaire.

Un type d'empilement de couches connu pour conférer aux substrats des propriétés « anti solaire » comprend (i) au moins une couche métallique fonctionnelle à propriétés de réflexion dans l'infrarouge et/ou dans le rayonnement solaire, notamment une couche fonctionnelle métallique à base d'argent ou d'alliage métallique contenant de l'argent et/ou une couche fonctionnelle à propriétés d'absorption dans le rayonnement solaire et/ou dans l'infra-rouge.

Le rayonnement solaire se compose d'ultraviolets et de la lumière visible. Dans ce type d'empilement, la couche fonctionnelle se trouve ainsi disposée entre deux revêtements diélectriques comportant chacun au moins une couche diélectrique qui sont chacune en un matériau diélectrique du type nitrure ou oxyde. On peut citer, par exemple, les nitrures et les oxydes de silicium, d'aluminium, de Nb, de Ti, de InSn et de SnZn.
De préférence, on peut citer le nitrure de silicium, l'oxyde de niobium et l'oxyde de titane.
On peut citer, comme exemples de film à contrôle solaire, les produits réflecteurs Solargard® de Saint-Gobain tel que le LX70 et les produits absorbeurs Ceramic Séries de Huper Optik® tel que le Huper Cptik® C5.

Du point de vu optique, le but de ces revêtements qui encadrent la couche fonctionnelle métallique est « d'antirefléter » cette couche fonctionnelle métallique.

Par « revêtement » au sens de la présente invention, il faut comprendre qu'il peut y avoir une seule couche ou plusieurs couches de matériaux différents à l'intérieur du revêtement.

Pour rappel, le facteur solaire d'un vitrage est le rapport de l'énergie solaire totale entrant dans le local à travers ce vitrage sur l'énergie solaire incidente totale et la sélectivité S correspond au rapport de la transmission lumineuse T_{Lvis} dans le visible du vitrage sur le facteur solaire FSdu vitrage et est telle que: S= T_{Lvis} / FS

Ces vitrages peuvent par ailleurs être intégrés dans des vitrages présentant des fonctionnalités particulières, comme par exemple des vitrages chauffants.

Comme habituellement, par «couche diélectrique» au sens de la présente invention, il faut comprendre que du point de vue de sa nature, le matériau est «non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. Il est connu de l'homme du métier que n est l'indice de réfraction et k, une constante propre à un milieu donné caractérisant un matériau.

L'épaisseur physique de ladite couche métallique fonctionnelle est de préférence comprise entre 5 nm et 20 nm, en incluant ces valeurs, afin d'atteindre une émissivité < 2,5%

Dans une autre version particulière de l'invention, ledit revêtement diélectrique disposé ou situé entre la face du substrat et ladite couche fonctionnelle métallique comporte une couche à haut indice de réfraction en un matériau présentant un indice de réfraction compris entre 2,3 et 2,7, cette couche étant de préférence à base d'oxyde. Les valeurs d'indice de réfraction indiquées dans le présent document sont les valeurs mesurées comme habituellement à la longueur d'onde de 550 nm.

Cette couche haut indice présente, de préférence une épaisseur physique comprise entre 5 et 15 nm.

Cette couche haut indice permet de maximaliser la haute transmission lumineuse dans le visible de l'empilement et a une action favorable sur l'obtention de couleurs neutres, tant en transmission qu'en réflexion.

L'épaisseur physique de ladite couche diélectrique à base d'oxyde de Nb et/ou d'oxyde de Ti nitrure est, de préférence, comprise entre 10 et 60 nm.

Dans une autre version particulière de l'invention, la couche métallique fonctionnelle est déposée directement sur un revêtement de sous-blocage disposé entre la couche métallique fonctionnelle et le revêtement diélectrique sous-jacent à la couche fonctionnelle et/ou la couche fonctionnelle est déposée directement sous un revêtement de sur-blocage disposé entre la couche métallique fonctionnelle et le revêtement diélectrique sus-jacent à ladite couche métallique fonctionnelle et le revêtement de sous-blocage et/ou le revêtement de sur-blocage comprend une couche fine (i) à base de métal choisi parmi le nickel, le titane, le chrome, l'or, le cuivre et leurs alliages, et (ii) présentant une épaisseur physique e' telle que 0,2 nm ≤ e' ≤ 2,5 nm. On peut citer comme alliage le NiCr.

Dans une autre version particulière de l'invention, la dernière couche du revêtement diélectrique sus-jacent, celle la plus éloignée du substrat, est à base d'oxyde, déposée de préférence sous stœchiométrique, et notamment est à base d'oxyde de titane (TiQₓ) ou à base d'oxyde mixte de zinc et d'étain (SnZnQₓ).

Les substrats des vitrages selon l'invention sont aptes à subir un traitement thermique sans dommage pour l'empilement de couches minces. Ils sont donc éventuellement bombés et/ou trempés.

Avec l'invention, il est possible de fabriquer un vitrage feuilleté comprenant au moins une couche de PVB et au moins une couche fonctionnelle thermosensible en une seule étape de lamination par autoclavage.

L'utilisation de couche de PSA simplifie la fabrication et diminue le coût par rapport à l'utilisation d'EVA.
En outre, la résistance mécanique de l'empilement selon l'invention est très bonne. Par ailleurs, la tenue chimique générale de cet empilement est globalement bonne.

## Revendications

1. Vitrage feuilleté comprenant :
• une première feuille de verre (1);
• au moins une feuille intercalaire (3) en polymère thermoplastique; ladite première feuille de verre (1) étant en contact direct avec ladite feuille intercalaire (3) ;
• éventuellement une feuille « anti solaire » (4) ou couche métallique fonctionnelle à propriétés de réflexion dans l'infrarouge et/ou dans le rayonnement solaire ;
• éventuellement une seconde feuille intercalaire (3) lorsque ladite feuille « anti-solaire » (4) est présente ;
• une deuxième feuille de verre (2); et
• au moins une feuille d'adhésif sensible à la pression (5), en contact direct avec une feuille fonctionnelle thermosensible (6) à base de cristaux liquides encapsulés, de particules électrophorétiques dispersées dans un milieu, de particules dispersées dans un fluide électrophorétique ou de particules de polarisation de la lumière;
ladite seconde feuille de verre (2) étant en contact direct avec ladite feuille d'adhésif sensible à la pression (5),
ladite feuille d'adhésif sensible à la pression (5) et ladite deuxième feuille de verre (2) étant en contact direct au niveau de la face externe de cette dernière,

2. Vitrage feuilleté selon la revendication 1 comprenant successivement :
• une première feuille de verre (1),
• une première feuille intercalaire (3) en polymère thermoplastique,
• une feuille « anti solaire » (4) ou couche métallique fonctionnelle à propriétés de réflexion dans l'infrarouge et/ou dans le rayonnement solaire,
• une seconde feuille intercalaire (3) lorsque ladite feuille « anti-solaire » (4) est présente,
• une deuxième feuille de verre (2),
• une feuille d'adhésif sensible à la pression (5),
• une feuille fonctionnelle thermosensible (6).

3. Vitrage feuilleté selon la revendication 1 comprenant
• une première feuille de verre (1),
• une feuille intercalaire (3) en polymère thermoplastique,
• une deuxième feuille de verre (2),
• une feuille d'adhésif sensible à la pression (5),
• une feuille fonctionnelle thermosensible (6).

4. Vitrage feuilleté selon l'une des revendications précédentes, dans lequel le polymère thermoplastique de la feuille intercalaire (3) est choisi parmi le polyvinylbutyral, le polyuréthane, l'éthylène acétate de vinyle et les ionomères.

5. Vitrage selon l'une des revendications précédentes, dans lequel le polymère thermoplastique de la feuille intercalaire (3) est le PVB.

6. Vitrage feuilleté selon l'une des revendications précédentes dans lequel l'adhésif sensible à la pression est choisi parmi les adhésifs sensibles à la pression à base d'acrylates et les adhésifs sensibles à la pression à base de silicone.

7. Vitrage feuilleté selon l'une des revendications précédentes dans lequel la feuille « anti solaire » est en argent ou tout autres métal ayant des propriétés de réflexion de la lumière ou un métal ou composé métallique ayant des propriétés d'absorption de la lumière.

8. Vitrage feuilleté selon l'une quelconque des revendications précédentes, **caractérisé en ce qu'**il est plat ou bombé.

9. Vitrage feuilleté selon l'une quelconque des revendications précédentes **caractérisé en ce qu'**il s'agit d'un vitrage de véhicule choisi parmi un pare-brise, un vitrage latéral avant, un vitrage latéral arrière, une lunette arrière et un vitrage de toit.

10. Vitrage feuilleté selon l'une quelconque des revendications précédentes **caractérisé en ce qu'**il s'agit d'un vitrage de véhicule choisi parmi une automobile, un train, un camion, un avion et un bus.

11. Procédé de fabrication d'un vitrage feuilleté selon l'une des revendications précédentes, dans lequel les étapes de mise en place des différentes feuilles ont lieu en partant (i) de la mise en place de la feuille intercalaire (3) en polymère thermoplastique sur la face interne de la première feuille de verre (1), en partant (ii) de la mise en place d'une feuille d'adhésif sensible à la pression (5) sur la face externe de la seconde feuille de verre (2) ou en partant (iii) de mise en place d'une feuille d'adhésif sensible à la pression (5) sur l'une des deux faces d'une feuille fonctionnelle thermosensible (6).

12. Procédé de fabrication d'un vitrage feuilleté selon la revendication précédente, comprenant :
• au moins une étape de mise en place d'une feuille intercalaire (3) en polymère thermoplastique sur la face interne d'une première feuille de verre (1), éventuellement préalablement bombée,
• éventuellement la mise en place d'une feuille « anti solaire » (4) sur la face restée vacante de ladite feuille intercalaire (3) qui est ainsi prise en sandwich entre ladite première feuille de verre (1) et ladite éventuelle feuille « anti solaire » (4) et la mise en place d'une seconde feuille intercalaire (3) sur la face restée vacante de ladite feuille « anti solaire » (4) qui est ainsi prise en sandwich entre une première et une seconde feuilles intercalaires (3),
• puis au moins la mise en place d'une seconde feuille de verre (2) sur la face, restée vacante de la première feuille intercalaire (3) lorsque lesdites seconde feuille intercalaire (3) et feuille « anti solaire » (4) sontabsentes, de manière à former un feuilleté partiel (12) et la mise en place d'une seconde feuille de verre (2) sur la face, restée vacante de la seconde feuille intercalaire (3) lorsque lesdites seconde feuille intercalaire (3) et feuille « anti solaire » (4) sont présentes, de manière à former un autre feuilleté partiel (11), et/ou
• au moins une étape de mise en place d'une feuille d'adhésif sensible à la pression (5) sur l'une des deux faces d'une feuille fonctionnelle thermosensible (6), de manière à former un feuilleté partiel (10).

13. Procédé selon la revendication 12, ledit feuilleté partiel (11) ou (12) est ensuite être appliqué, au niveau de la face restée vacante de sa seconde feuille de verre (2), sur ou sous ledit feuilleté partiel (10) au niveau de la face vacante de sa feuille d'adhésif sensible à la pression (5).

14. Procédé de fabrication d'un vitrage feuilleté selon l'une des revendications 11 à 13 comprenant en outre au moins :
• une étape de dégazage sous vide du feuilleté résultant, avec utilisation d'un joint périphérique ou d'un sac à vide,
• éventuellement une étape de scellage à chaud des bords dudit feuilleté, et
• une étape d'autoclavage.

15. Procédé de fabrication d'un vitrage feuilleté selon l'une des revendications 11 à 14 comprenant en outre au moins une étape de calandrage, éventuellement à chaud.

16. Utilisation d'un vitrage selon l'une des revendications 1 à 10 pour fabriquer un vitrage de véhicule choisi parmi un pare-brise, un vitrage latéral avant, un vitrage latéral arrière, une lunette arrière et un vitrage de toit et/ou pour fabriquer un vitrage de véhicule choisi parmi une automobile, un train, un camion, un aéronef et un bus.

## Patentansprüche

1. Verbundverglasung, umfassend:
• eine erste Glasscheibe (1);
• mindestens eine Zwischenfolie (3) aus thermoplastischem Polymer, wobei die erste Glasscheibe (1) in direktem Kontakt mit der Zwischenfolie (3) steht;
• eventuell eine "Sonnenschutz"-Folie (4) oder metallische Funktionsschicht mit Reflexionseigenschaften im Infrarot- und/oder im Sonnenstrahlungsbereich;
• eventuell eine zweite Zwischenfolie (3), wenn die "Sonnenschutz"-Folie (4) vorhanden ist;
• eine zweite Glasscheibe (2); und
• mindestens eine druckempfindliche Haftfolie (5) in direktem Kontakt mit einer wärmeempfindlichen Funktionsfolie (6) auf der Basis von gekapselten Flüssigkristallen, von in einem Medium dispergierten elektrophoretischen Partikeln, von in einem elektrophoretischen Fluid dispergierten Partikeln oder von Lichtpolarisationspartikeln;
wobei die zweite Glasscheibe (2) in direktem Kontakt mit der druckempfindlichen Haftfolie (5) steht,
wobei die druckempfindliche Haftfolie (5) und die zweite Glasscheibe (2) an deren Außenseite in direktem Kontakt stehen.

2. Verbundverglasung nach Anspruch 1, umfassend nacheinander:
• eine erste Glasscheibe (1),
• eine erste Zwischenfolie (3) aus thermoplastischem Polymer,
• eine "Sonnenschutz"-Folie (4) oder metallische Funktionsschicht mit Reflexionseigenschaften im Infrarot- und/oder im Sonnenstrahlungsbereich,
• eine zweite Zwischenfolie (3), wenn die "Sonnenschutz"-Folie (4) vorhanden ist;
• eine zweite Glasscheibe (2),
• eine druckempfindliche Haftfolie (5),
• eine wärmeempfindliche Funktionsfolie (6).

3. Verbundverglasung nach Anspruch 1, umfassend
• eine erste Glasscheibe (1),
• eine Zwischenfolie (3) aus thermoplastischem Polymer,
• eine zweite Glasscheibe (2),
• eine druckempfindliche Haftfolie (5),
• eine wärmeempfindliches Funktionsfolie (6).

4. Verbundverglasung nach einem der vorhergehenden Ansprüche, wobei das thermoplastische Polymer der Zwischenfolie (3) aus Polyvinylbutyral, Polyurethan, Ethylenvinylacetat und den lonomeren ausgewählt ist.

5. Verglasung nach einem der vorhergehenden Ansprüche, wobei das thermoplastische Polymer der Zwischenfolie (3) PVB ist.

6. Verbundverglasung nach einem der vorhergehenden Ansprüche, wobei das druckempfindliche Haftmittel aus den druckempfindlichen Haftmitteln auf Acrylatbasis und den druckempfindlichen Haftmitteln auf Silikonbasis ausgewählt ist.

7. Verbundverglasung nach einem der vorhergehenden Ansprüche, wobei die "Sonnenschutz"-Folie aus Silber oder jedem anderen Metall mit lichtreflektierenden Eigenschaften oder einem Metall oder einer Metallverbindung mit lichtabsorbierenden Eigenschaften ist.

8. Verbundverglasung nach einem der vorhergehenden Ansprüche, **dadurch gekennzeichnet, dass** sie flach oder gewölbt ist.

9. Verbundverglasung nach einem der vorhergehenden Ansprüche, **dadurch gekennzeichnet, dass** es sich um eine Fahrzeugverglasung handelt, die aus einer Windschutzscheibe, einer vorderen Seitenscheibe, einer hinteren Seitenscheibe, einer Heckscheibe und einer Dachverglasung ausgewählt ist.

10. Verbundverglasung nach einem der vorhergehenden Ansprüche, **dadurch gekennzeichnet, dass** es sich um eine Verglasung für ein Fahrzeug handelt, das aus einem Personenkraftwagen, einem Zug, einem Lastkraftwagen, einem Flugzeug und einem Bus ausgewählt ist.

11. Verfahren zur Herstellung einer Verbundverglasung nach einem der vorhergehenden Ansprüche, wobei die Schritte des Anordnens der verschiedenen Folien beginnend mit (i) dem Anordnen der Zwischenfolie (3) aus thermoplastischem Polymer auf der Innenseite der ersten Glasscheibe (1), beginnend mit (ii) dem Anordnen einer druckempfindlichen Haftfolie (5) auf der Außenseite der zweiten Glasscheibe (2) oder beginnend mit (iii) dem Anordnen einer druckempfindlichen Haftfolie (5) auf einer der beiden Seiten einer wärmeempfindlichen Funktionsfolie (6) stattfinden.

12. Verfahren zur Herstellung einer Verbundverglasung nach vorhergehendem Anspruch, umfassend:
• mindestens einen Schritt des Anordnens einer Zwischenfolie (3) aus thermoplastischem Polymer auf der Innenseite einer ersten Glasscheibe (1), die eventuell zuvor gewölbt wurde,
• eventuell das Anordnen einer "Sonnenschutz"-Folie (4) auf der frei gebliebenen Seite der Zwischenfolie (3), die somit zwischen der ersten Glasscheibe (1) und der etwaigen "Sonnenschutz"-Folie (4) angeordnet ist, und Anordnen einer zweiten Zwischenfolie (3) auf der frei gebliebenen Seite der "Sonnenschutz"-Folie (4), die somit zwischen einer ersten und einer zweiten Zwischenfolie (3) angeordnet ist,
• dann mindestens das Anordnen einer zweiten Glasscheibe (2) auf der frei gebliebenen Seite der ersten Zwischenfolie (3), wenn die zweite Zwischenfolie (3) und die "Sonnenschutz"-Folie (4) nicht vorhanden sind, so dass ein Teilverbund (12) gebildet wird, und das Anordnen einer zweiten Glasscheibe (2) auf der frei gebliebenen Seite der zweiten Zwischenfolie (3), wenn die zweite Zwischenfolie (3) und die "Sonnenschutz"-Folie (4) vorhanden sind, so dass ein weiteres Teilverbund (11) gebildet wird, und/oder
• mindestens einen Schritt des Anordnens einer druckempfindlichen Haftfolie (5) auf einer der beiden Seiten einer wärmeempfindlichen Funktionsfolie (6), so dass ein Teilverbund (10) gebildet wird.

13. Verfahren nach Anspruch 12, wobei der Teilverbund (11) oder (12) anschließend an der frei gebliebenen Seite seiner zweiten Glasscheibe (2) auf oder unter dem Teilverbund (10) an der freien Seite seiner druckempfindlichen Haftfolie (5) angelegt wird.

14. Verfahren zur Herstellung einer Verbundverglasung nach einem der Ansprüche 11 bis 13, umfassend ferner mindestens:
• einen Schritt des Vakuumentgasens des resultierenden Verbundglases unter Verwendung einer Umfangsdichtung oder eines Vakuumsacks,
• eventuell einen Schritt des Heißversiegelns der Kanten des Verbunds, und
• einen Schritt des Autoklavierens.

15. Verfahren zur Herstellung einer Verbundverglasung nach einem der Ansprüche 11 bis 14, umfassend ferner mindestens einen Schritt des Kalandrierens, eventuell des Heißkalandrierens.

16. Verwendung einer Verglasung nach einem der Ansprüche 1 bis 10 zur Herstellung einer Fahrzeugverglasung, die aus einer Windschutzscheibe, einer vorderen Seitenscheibe, einer hinteren Seitenscheibe, einer Heckscheibe und einer Dachverglasung ausgewählt ist, und/oder zur Herstellung einer Verglasung für ein Fahrzeug, das aus einem Personenkraftwagen, einem Zug, einem Lastkraftwagen, einem Flugzeug und einem Bus ausgewählt ist.

## Claims

1. A laminated glazing comprising:
• a first glass sheet (1);
• at least one interlayer sheet (3) made of thermoplastic polymer; said first glass sheet (1) being in direct contact with said interlayer sheet (3);
• optionally a "solar-protection" sheet (4) or functional metal layer having reflective properties in the infrared region and/or in the solar radiation region;
• optionally a second interlayer sheet (3) when said "solar-protection" sheet (4) is present;
• a second glass sheet (2); and
• at least one sheet of pressure-sensitive adhesive (5), in direct contact with a heat-sensitive functional sheet (6) based on encapsulated liquid crystals, on electrophoretic particles dispersed in a medium, on particles dispersed in an electrophoretic fluid or on particles for the polarization of light;
said second glass sheet (2) being in direct contact with said sheet of pressure-sensitive adhesive (5),
said sheet of pressure-sensitive adhesive (5) and said second glass sheet (2) being in direct contact at the external face of the latter.

2. The laminated glazing as claimed in claim 1, successively comprising:
• a first glass sheet (1),
• a first interlayer sheet (3) made of thermoplastic polymer,
• a "solar-protection" sheet (4) or functional metal layer having reflective properties in the infrared region and/or in the solar radiation region,
• a second interlayer sheet (3) when said "solar-protection" sheet (4) is present,
• a second glass sheet (2).
• a sheet of pressure-sensitive adhesive (5),
• a heat-sensitive functional sheet (6).

3. The laminated glazing as claimed in claim 1, comprising:
• a first glass sheet (1),
• an interlayer sheet (3) made of thermoplastic polymer,
• a second glass sheet (2),
• a sheet of pressure-sensitive adhesive (5),
• a heat-sensitive functional sheet (6).

4. The laminated glazing as claimed in one of the preceding claims, in which the thermoplastic polymer of the interlayer sheet (3) is chosen from polyvinyl butyral, polyurethane, ethylene/vinyl acetate and ionomers.

5. The glazing as claimed in one of the preceding claims, in which the thermoplastic polymer of the interlayer sheet (3) is PVB.

6. The laminated glazing as claimed in one of the preceding claims, in which the pressure-sensitive adhesive is chosen from pressure-sensitive adhesives based on acrylates and pressure-sensitive adhesives based on silicone.

7. The laminated glazing as claimed in one of the preceding claims, in which the "solar-protection" sheet is made of silver or any other metal having light-reflecting properties or a metal or metal compound having light-absorbing properties.

8. The laminated glazing as claimed in any one of the preceding claims, **characterized in that** it is flat or bent.

9. The laminated glazing as claimed in any one of the preceding claims, **characterized in that** it is a vehicle glazing chosen from a windshield, a front side glazing, a rear side glazing, a rear window and a roof glazing.

10. The laminated glazing as claimed in any one of the preceding claims, **characterized in that** it is a glazing of a vehicle chosen from a motor vehicle, a train, a truck, a plane and a bus.

11. A process for the manufacture of a laminated glazing as claimed in one of the preceding claims, in which the stages of installing the different sheets take place starting (i) from the installing of the interlayer sheet (3) made of thermoplastic polymer on the internal face of the first glass sheet (1), starting (ii) from the installing of a sheet of pressure-sensitive adhesive (5) on the external face of the second glass sheet (2) or starting (iii) from the installing of a sheet of pressure-sensitive adhesive (5) on one of the two faces of a heat-sensitive functional sheet (6).

12. The process for the manufacture of a laminated glazing as claimed in the preceding claim, comprising:
• at least one stage of installing an interlayer sheet (3) made of thermoplastic polymer on the internal face of a first glass sheet (1), optionally bent beforehand,
• optionally the installation of a "solar-protection" sheet (4) on the face which has remained vacant of said interlayer sheet (3), which is thus sandwiched between said first glass sheet (1) and said optional "solar-protection" sheet (4), and the installation of a second interlayer sheet (3) on the face which has remained vacant of said "solar-protection" sheet (4), which is thus sandwiched between a first interlayer sheet (3) and a second interlayer sheet (3),
• then at least the installation of a second glass sheet (2) on the face which has remained vacant of the first interlayer sheet (3) when said second interlayer sheet (3) and said "solar-protection" sheet (4) are absent, so as to form a partial laminate (12), and the installation of a second glass sheet (2) on the face which has remained vacant of the second interlayer sheet (3) when said second interlayer sheet (3) and said "solar-protection" sheet (4) are present, so as to form another partial laminate (11), and/or
• at least one stage of installing a sheet of pressure-sensitive adhesive (5) on one of the two faces of a heat-sensitive functional sheet (6), so as to form a partial laminate (10).

13. The process as claimed in claim 12, said partial laminate 11 or 12 is subsequently be applied, at the face which has remained vacant of its second glass sheet 2, on or under said partial laminate 10 at the vacant face of its sheet of pressure-sensitive adhesive 5.

14. The process for the manufacture of a laminated glazing as claimed in one of claims 11 to 13, additionally comprising at least:
• a stage of degassing the resulting laminate under vacuum, with use of a peripheral seal or of a vacuum bag,
• optionally one stage of heat sealing of the edges of said laminate, and
• one autoclaving stage.

15. The process for the manufacture of a laminated glazing as claimed in one of claims 11 to 14, additionally comprising at least one calendering stage, optionally one hot calendering stage.

16. The use of a glazing as claimed in one of claims 1 to 10 to manufacture a vehicle glazing chosen from a windshield, a front side glazing, a rear side glazing, a rear window and a roof glazing and/or to manufacture a glazing for a vehicle chosen from a motor vehicle, a train, a truck, an aircraft and a bus.
